# EUROPEAN PATENT APPLICATION

(11) **EP 0 568 346 A1**
(43) Date of publication of application: **03.11.1993**
(21) Application number: 93303323.5
(22) Date of filing: 28.04.1993
(51) Int. Cl.: C02F 3/12

(54) **Oxygen dissolving apparatus**

(30) Priority: 01.05.1992 AU 2221/92
(71) Applicant: THE COMMONWEALTH INDUSTRIAL GASES LIMITED, Chatswood, NSW 206710 (AU)
(72) Inventor: Ogston, Mervyn Ross, Sunnybank Hills, 4109 Queensland (AU)
(74) Representative: Gough, Peter

(57) **Abstract**

An oxygen dissolving apparatus for dissolving oxygen in sewerage. The apparatus comprises a constriction (6) within the main (2) for inducing a downstream turbulence in a sewerage flow and oxygen injection means (10) to directly inject oxygen into the main (2) at or adjacent said constriction (6). The injected oxygen is dispersed into the sewerage in the turbulence created downstream.

## Description

This invention relates to apparatus for dissolving oxygen in sewerage mains.

The advantage of dissolving oxygen in sewerage mains and in particular, rising mains removing sewerage from a local gravity collection network, are well recognised. In particular, dissolved oxygen has been found to significantly reduce the odour associated with the sewerage. The effectiveness of the process is very much dependent upon the efficiency with which the oxygen is dissolved into the raw sewerage.

Prior art devices for this purpose fall into three general categories. The first is a U-tube cascading type system, which although effective is expensive to manufacture and utilises a considerable amount of space. Systems for direct injection of oxygen into the sewerage, via a nozzle or the like, are also available. However, these are severely limited by the dissolving efficiency. A further system used is a side stream injection system. However, this suffers from similar limitations to the direct injection and has additional cost and space requirements.

It is an object of this invention to provide an oxygen dissolving apparatus for a sewerage rising main which will overcome or at least ameliorate some of the abovementioned disadvantages.

Accordingly, in one aspect this invention consists in an in-line oxygen dissolving apparatus for a sewerage main comprising a constriction within said main for induce a downstream turbulence in a sewerage flow, and oxygen injection means to directly inject oxygen gas into the main at or adjacent said constriction for dispersion in the downstream turbulence.

It will be appreciated that the oxygen is mixed into the sewerage and dispersed therein by the turbulence created by the constriction.

The constriction can take any suitable form and may be symmetric or asymmetric. Preferably, the constriction takes the form of a frusto conical section, having about 15° of taper. In one form, the constriction is included within a section of pipeline that is fitted into the rising main.

The degree of constriction is preferably chosen so as to reduce the flow of the sewerage to substantially below between 7 and 9 metres per second. This corresponds to a head loss in a typical case of up to 3 to 4 metres.

The oxygen is directly injected into the flow by any suitable means for dispersion in the induced turbulence. The point of injection can be within, upstream or downstream of the constriction. In the preferred embodiment the oxygen is injected approximately 2 to 3 pipeline diameters upstream from the constriction.

In a typical case the desired velocity reduction of the sewerage corresponds to the effective internal diameter of the pipeline being reduced by of the order of 50% by the constriction. In a pipeline of approximately 380mm internal diameter the constriction is typically reduced to approximately 165mm internal diameter over a distance of about 550mm.

One embodiment of the invention will now be described, by way of example only, with reference to the accompanying drawings in which:-
Figure 1 is an elevation of a pipeline section including a constriction forming part of this invention;
Figure 2 is an end view of the pipeline section shown in Figure 1;
Figure 3 is a section along the line 3-3 of Figure 1; and
Figure 4 is a schematic drawing showing the oxygen dissolving apparatus according to the present invention.

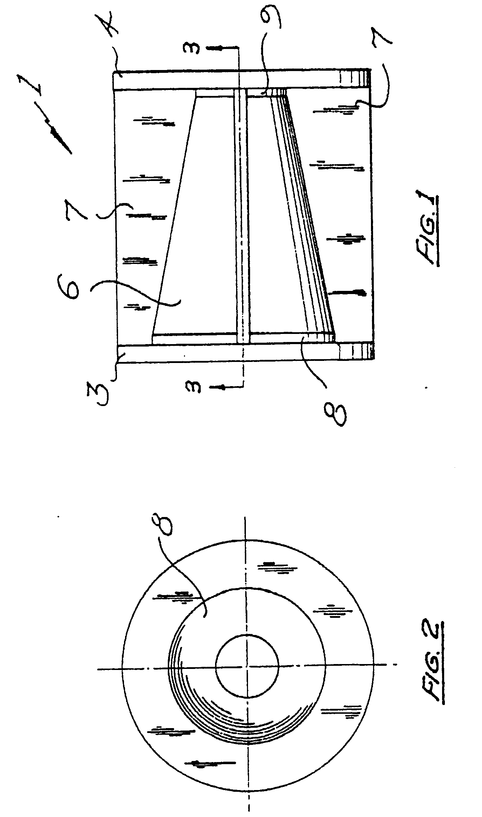

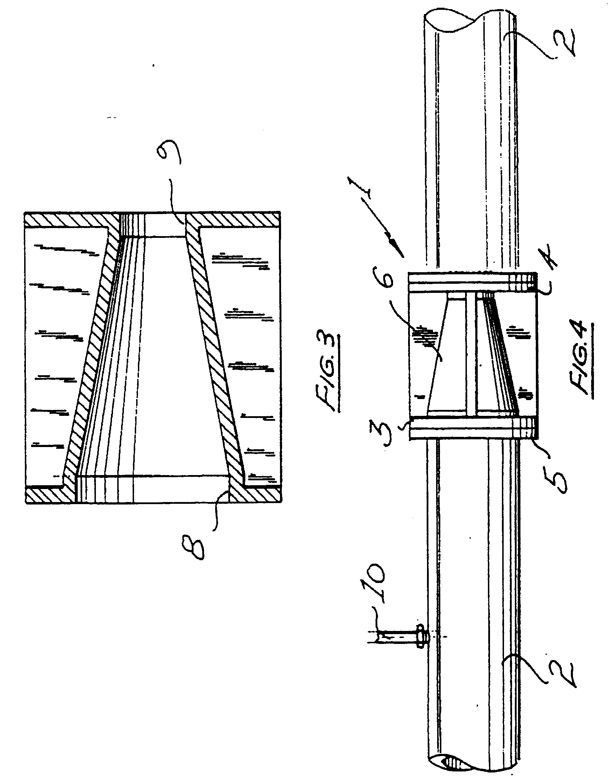

Referring to the drawings the pipeline segment 1 shown in Figures 1 to 3 forms part of a rising main 2 shown in Figure 4. The pipeline segment 1 is formed with flanges 3, 4 at opposite ends which are used to bolt the section to corresponding flanges 5 on the pipes forming the rising main 2 in the conventional manner.

The pipeline segment 1 may take any suitable form and may be symmetric or asymmetric but preferably includes a smooth surfaced generally frusto conical insert 6 which extends between flanges 3 and 4 and is supported by webs 7. The inlet of segment 1 is a cylindrical portion 8 having a diameter the same as the internal diameter of main 2. Cylindrical portion 8 joins frusto conical insert 6 which tapers at about 15° to a cylindrical outlet 9 of significantly reduced diameter. In a typical case, a desired velocity reduction of the sewerage corresponds to the effective internal diameter of the pipeline being reduced by the order of fifty percent. In the case of a 380mm pipeline the diameter of cylindrical portion 9 is approximately 165mm. Such a reduction may take place over a distance of about 550mm.

The flange 4 extends from adjacent the opening of cylindrical portion 9 so that when the consecutive portion of main 2 is jointed to segment 1 there is a sudden increase in diameter from cylindrical portion 9 to the internal diameter of the main. This induces a very significant downstream turbulence in the sewerage flow.

As shown in Figure 4 an oxygen injection nozzle 10 of any suitable known type is positioned within, upstream or downstream of the constriction. In a preferred constriction, the nozzle 10 is positioned in the pipeline 2 to 3 diameters upstream from segment 1. Oxygen gas is injected into the sewerage by means of any suitable known supply system and entrained into the flow. The flow enters the constriction and the resulting downstream turbulence disperses the entrained oxygen within the flow and results in a very efficient dissolving of the oxygen into the sewerage.

In order to ensure the efficient oxygen injection, it is preferably not to reduce the flow of the sewerage to substantially below between seven and nine metres per second. This corresponds to a head loss in a typical case of up to three or four metres.

The foregoing describes only one embodiment of the invention and modifications can be made thereto without departing from the scope of the invention.

## Claims

1. An in-line oxygen dissolving apparatus for a sewerage main (2) characterised in that said apparatus comprises a constriction (6) within said main (2) for inducing a downstream turbulence in a sewerage flow and oxygen injection means (10) to directly inject oxygen into the main (2) at or adjacent said constriction (6) for dispersing in the downstream turbulence.

2. An apparatus as claimed in claim 1, further characterised in that the constriction (6) comprises a frusto conical section (6) which tapers at an angle of substantially 15 degrees.

3. An apparatus as claimed in claim 1 or 2, further characterised in that said apparatus is included within a section of pipeline (1) which forms part of said main (2).

4. An apparatus as claimed in any one of the preceding claims, further characterised in that the oxygen is injected upstream, within, or downstream of the constriction (6).

5. An apparatus as claimed in any one of claims 1 to 3, further characterised in that the oxygen is injected approximately 2 to 3 pipeline diameters upstream of the constriction (6).

6. An apparatus as claimed in any one of the preceding claims, further characterised in that the constriction (6) reduces the internal diameter of the pipeline (2).

7. An apparatus as claimed in claim 6 in which the constriction (6) reduces the internal diameter by substantially fifty percent.

8. An apparatus as claimed in any one of the preceding claims, further characterised in that the constriction (6) is configured so as not to reduce the flow of sewerage to substantially below between 7 and 9 metres per second.
